# EUROPEAN PATENT APPLICATION

(11) **EP 4 832 342 A1**
(43) Date of publication of application: **28.10.2026**
(21) Application number: 23962082.6
(22) Date of filing: 19.12.2023
(51) Int. Cl.: H02S 20/32, H02S 40/00, F16F 15/08, F24S 40/00, F24S 30/425, F24S 25/632

(54) **DAMPING BELT FOR SOLAR TRACKERS**

(71) Applicant: Trina Solar Spain, S.L.U., 28050 Madrid (ES)
(72) Inventor: TOBALINA BALDEON, Daniel, 28050 Madrid (ES); VOSHCHENKO GAMERNYK, Andriy, 28050 Madrid (ES)
(74) Representative: Evens, Paul Jonathan
(86) International application number: PCT/ES2023/070763
(87) International publication number: WO 2025/133411

(57) **Abstract**

The present invention relates to a damping belt (1) for solar trackers, for fastening panels on a rotation shaft of a solar tracker, comprising at least one vibration damping device (2) with a rigid central body (3), which comprises at the upper portion thereof a plate (4) for fastening the solar panels thereto, while at the lower portion thereof it comprises a cross member (5) arranged in the longitudinal direction of the belt (1) in the operative position, and which is embedded at its ends in blocks (6) of elastic material, said blocks (6) being joined to platens (7), the platens (7) having wings (7.1) for attaching the vibration damping device (2) to the damping belt (1), so that the blocks (6) are resting on the bottom (1.2) of the groove of the damping belt (1) and the rigid central body (3) has freedom of movement in the direction perpendicular to the plane of the solar panel for damping vibrations in the operative position.

## Description

### TECHNICAL FIELD

The present invention relates to solar trackers comprising photovoltaic module panels incorporated on a rotation shaft, to which said panels are attached by means of support belts, proposing a belt with a damping system to avoid the transmission of vibrations from the photovoltaic module panels to the rotation shaft, with embodiment features of said damping system that optimise the functional behaviour thereof.

### BACKGROUND OF THE INVENTION

Solar trackers consisting of photovoltaic module panels incorporated on a rotation shaft for orientation towards the sun are structured by attaching the photovoltaic module panels on the rotation shaft by means of support belts, generally consisting of profiles with a ribbed configuration, so that said belts are tied on the rotation shaft and the photovoltaic module panels are attached thereto by screwing or equivalent means.

This arrangement facilitates the assembly of the solar trackers, but has the drawback that the stresses transmitted by the photovoltaic module panels to the rotation shaft, due to the incidence of the wind and the orientation movements, generate vibrations that affect the operation of the rotation shaft and, as a result, the behaviour of the solar tracker orientation.

To avoid this problem, damping solutions are known that apply a complementary elastic fastening to the photovoltaic module panels, such as the one proposed, for example, in document CN213521776, with a linear damper that is attached between the photovoltaic module panel and the ground, but this solution has assembly difficulties and does not offer a really effective behaviour for the objective of avoiding the vibrations that are transmitted in the application assembly between the photovoltaic module panel and the rotation shaft of the solar tracker.

It is therefore obvious that a more appropriate damping solution is required, which effectively eliminates the transmission of vibrations to the rotation shaft of the solar trackers and which does not hinder the structural assembly of the solar tracker in use.

### DESCRIPTION OF THE INVENTION

According to the present invention, a damping system is proposed for solar trackers of the aforementioned type, with an embodiment that makes the reduction of vibrations in said solar trackers more efficient, thereby minimising the fatigue of the mechanical components and, as a result, extending the service life of the structural assemblies.

The present invention therefore relates to a damping belt for solar trackers, for fastening panels on a rotation shaft of a solar tracker, comprising at least one vibration damping device with a rigid central body, which comprises at the upper portion thereof a plate for fastening the solar panels thereto, while at the lower portion thereof it comprises a cross member arranged in the longitudinal direction of the belt in the operative position, and which is embedded at its ends in blocks of elastic material, said blocks being joined to platens, the platens with wings for attaching the vibration damping device to the damping belt, so that the blocks are supported on the bottom of the groove of the damping belt and the rigid central body has freedom of movement in the direction perpendicular to the plane of the panel for damping vibrations in the operative position.

As is well known, the belts for attaching solar panels to a rotation shaft of a solar tracker are of omega geometry, with a groove in the middle and wings where the panels are attached. In this case, the panels are attached to the belts by means of at least one vibration damping device, so that the vibration damping device acts as a "silent block" absorbing possible vibrations produced in the solar panel, by means of the movement in a direction perpendicular to the plane of the panel experienced by the rigid central body, which is attenuated by the flexibility of the blocks of elastic material.

Preferably, the distance between the plate and the wing of the damping belt in the operative position shall be sufficient to allow damping. Thus, the vibration damping device will be fitted into the groove of the belt, achieving an assembly in which the stresses transmitted by the solar panel are absorbed by the damping device, thus avoiding the transmission of vibration-causing stresses to the supporting belt and, as a result, their repercussion on the rotation shaft of the solar tracker.

Operative position is understood as the position for assembling the vibration-damping device attached to the belt.

Preferably the width of the blocks of elastic material in the transverse direction is equal to the width of the platens.

According to an alternative embodiment of the invention, the platens are of inclined geometry towards the rigid central body, with the wings configured for attaching said platens to the bottom of the groove of the damping belt in an operative position.

Preferably the geometry of these platens is S-shaped. This facilitates the bending of the blocks of elastic material and the attachment of the vibration damping device to the bottom of the damping belt.

In accordance with a feature of the invention, the blocks of elastic material in the inactive position protrude from the plane of attachment of the platens to the bottom of the damping belt such that prestressing occurs after attaching the vibration damping device in the operative position. Thanks to this configuration, more efficient damping is achieved due to the prestressing.

According to a feature of the invention, the damping belt comprises folded wings. Since attaching the solar panel to the wings is not required, said wings can be dispensed with as the solar panel will be attached to the upper plate of the vibration damping device. This reduces material and increases the strength of the belt.

According to an alternative embodiment of the invention, the damping belt comprises a clamp attachable to the plate of the vibration damping device, for attaching the solar panel. So the vibration damping device is attached to the belt, subsequently the panel is supported on the plate of the vibration damping device and finally the clamp is attached, trapping the solar panel which will be attached between the plate and the clamp.

In accordance with another aspect of the invention, the platens of the vibration damping device are of flat geometry with their wings configured for attaching said platens on the wings of the damping belt. This configuration facilitates the assembly with an easier attachment of the damping device to the belt.

Preferably, the platens of the above configuration comprise recesses towards the blocks of elastic material. These recesses stiffen the plates so that they do not deflect under loads from above. Additionally, they create a bulge in the area of the elastic material which makes the device saturate earlier and this parameter able to be adjusted. Saturation is understood as the fact that the stiffness increases more exponentially above a certain displacement beyond which it is no longer of interest to have a linear area of constant stiffness and further restricting motion by increasing stiffness is desired.

Preferably, the cross member of the rigid central body of the damping device protrudes from the sides of the blocks of elastic material. That is, the width of the cross member is greater than the width of the blocks of elastic material. This allows demoulding from bottom to top, or vulcanising the part in the mould with the part lying down, so it would be demoulded from left to right. If demoulded from bottom to top, the inner metal insert would need to protrude and, due to process, would be surrounded by a rubber which would not work, but would be necessary. Also, due to this configuration, when a force is applied in a direction perpendicular to the plane of the panel on the inner cross member, the elastic material will be crushed and, being incompressible, will overflow laterally. By having part of the rigid cross member protruding, it allows the protruding elastic material to continue to be crushed, making the piece more rigid and its slope more saturated at the end, and preventing the elastic material from being cut or pinched if the cross member is inside and does not protrude.

Moreover, the lower portion of the cross member of the metal central body incorporates a protrusion of elastic material that acts as a stop for the displacement of the rigid central body. This results in a stop that can absorb the stresses of high compressive loads more efficiently.

### BRIEF DESCRIPTION OF THE DRAWINGS

Figure 1 shows a perspective view of an exemplary embodiment of a damping device as used in the damping belt of the invention.
Figure 2 is a frontal cross-sectional view of the damping device installed on the damping belt.
Figure 3 is a cross-sectional profile view of the damping device installed on the damping belt.
Figure 4 is a profile view of an alternative embodiment of the invention with a damping belt with folded wings.
Figure 5 is a profile view of an alternative embodiment of the invention with a clamp for attaching the solar panel.
Figure 6 is a perspective view of an alternative embodiment of the invention with extruded aluminium plates.
Figure 7 is a perspective view of another alternative embodiment of a damping device of the invention.
Figure 8 is a perspective view of the damping device of figure 7 attached to the damping belt.
Figure 9 is a frontal view of the cross section of figure 8.

### PREFERRED EMBODIMENT OF THE INVENTION

The subject matter of the invention relates to a damping system for eliminating vibrations in solar trackers consisting of photovoltaic module panels that are fastened by means of belts on a rotation shaft for dynamic orientation towards the sun, the disclosed system comprising a damping belt (1) with at least one damping device (2) for the fastening assembly of the solar panel with respect to the rotation shaft. The solar panels are fastened during assembly, by means of bolted fastening or similar, on one or more damping devices (2), while the damping devices (2) are attached to the damping belt (1).

The damping devices (2) used in the damping belt (1) of the invention consist of a rigid central body (3), preferably metal, which has a plate (4) on the upper portion, to attach the solar panels of the solar tracker application on the same. The lower portion of said rigid central body (3) comprises a cross member (5), which is embedded at its ends in blocks (6) of elastic material, to which platens (7), preferably made of metal, are joined.

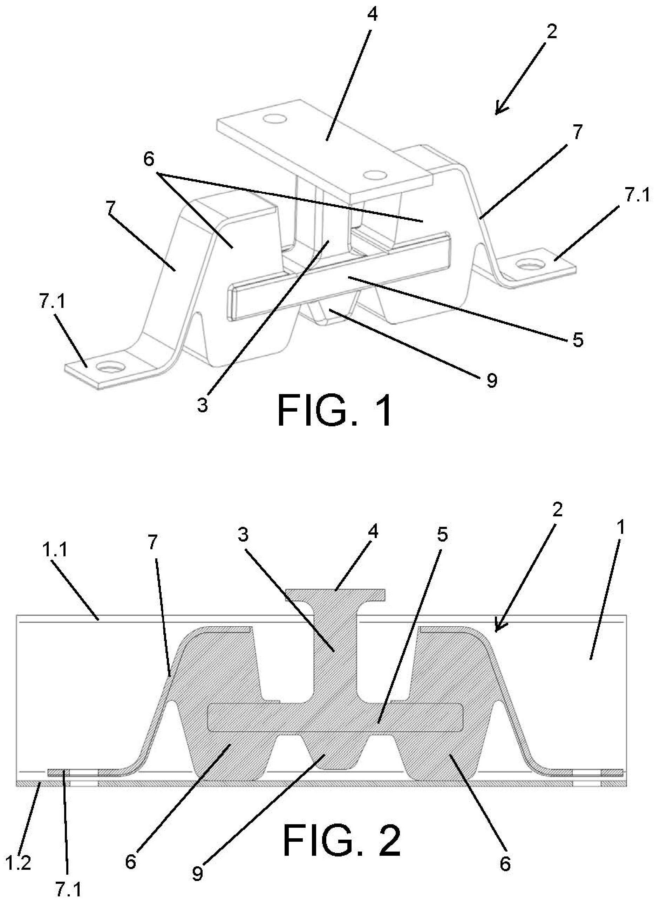

As can be seen in the practical embodiment of figures 1 to 3, the blocks (6) are housed in the platens (7) which have wings (7.1) on the lower portion for attaching the damping device (2) to the damping belt (1), and more specifically, the damping device (2) being fitted in the groove of the belt (1), and attached with the wings (7.1) of the platens (7) to the bottom (1.2) of the belt (1).

As can be seen in the figures, the rigid central body (3) has an inverted T-shape with the cross member (5) arranged longitudinally in the belt (1), longitudinal being understood as the dimension along the length of the belt (1). And the plate (4) being a flat plate arranged in a direction perpendicular to the cross member (5) for attaching the solar panels.

With this arrangement, the solar panels are joined to the damping belt (1) on the rotation shaft of the solar tracker by means of the damping devices (2), so that the stresses transmitted by said solar panels, due to the incidence of the wind on the same or to the orientation movement of the solar tracker, are absorbed by the blocks (6) of elastic material of the damping devices (2), preventing these stresses from causing vibrations on the rotation shaft.

In order to achieve effective damping under these conditions, the blocks (6) of elastic material are intended to be oversized in height at the lower portion, exceeding the level of the wings (7.1) for attaching the metal plates (7) downwards by a small length, as can be seen in figure 2. Thus, when said wings (7.1) are attached to the bottom (1.2) of the damping belt (1) of the application assembly, said blocks (6) of elastic material are compressed, resulting in a prestressing which improves the damping conditions.

Furthermore, at the lower portion, the blocks (6) of elastic material have a flat surface, which provides a broad support when mounted on the damping belt (1), resulting in a better distribution of the force for compressing the blocks (6) of elastic material in the damping effect.

Moreover, according to a preferred embodiment, the lower portion of the cross member (5) of the central metal body (3) has a centrally incorporated protrusion (9), also of elastic material, between the blocks (6) of elastic material, which provides a stop for high compressive loads.

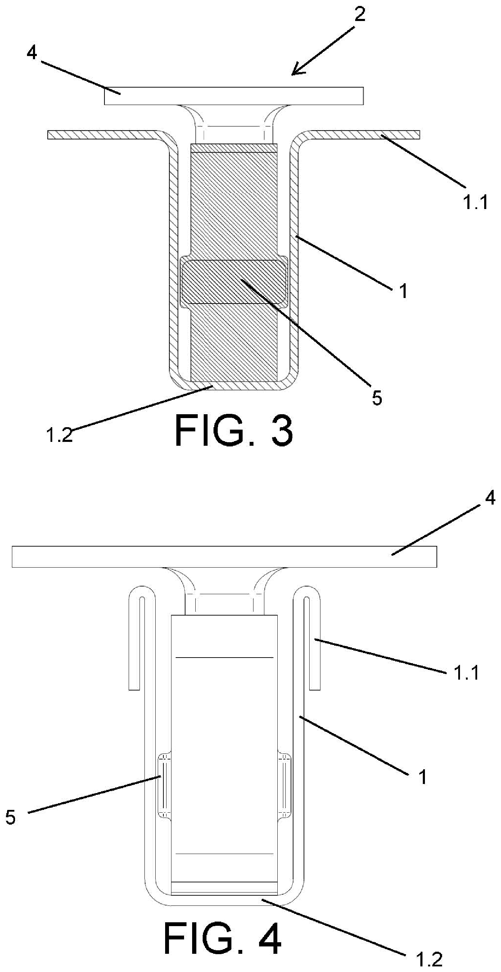

In accordance with a feature of the invention, the cross member (5) of the central metal body (3) is intended to protrude from the side faces of the blocks (6) of elastic material as shown in figure 3. The width of the cross member (5) being larger than the width of the plates (7), and preferably with a dimension equal to the width of the groove of the belt (1) used in the assembly for fastening the solar panels on the solar trackers, thus achieving an assembly arrangement of the damping devices (2) that facilitates the expansion of said blocks (6) of elastic material, improving the damping effect.

In such conditions, the damping system can be applied with belts (1) of any type in the orientation rotating assemblies of solar trackers, which can be, for example, damping belts (1) in a ribbed configuration and having wings (1.1), or as can be seen in figure 4, in an alternative embodiment the wings (1.1) of the damping belt (1) can be folded, thus saving material and providing rigidity to the belt (1) itself.

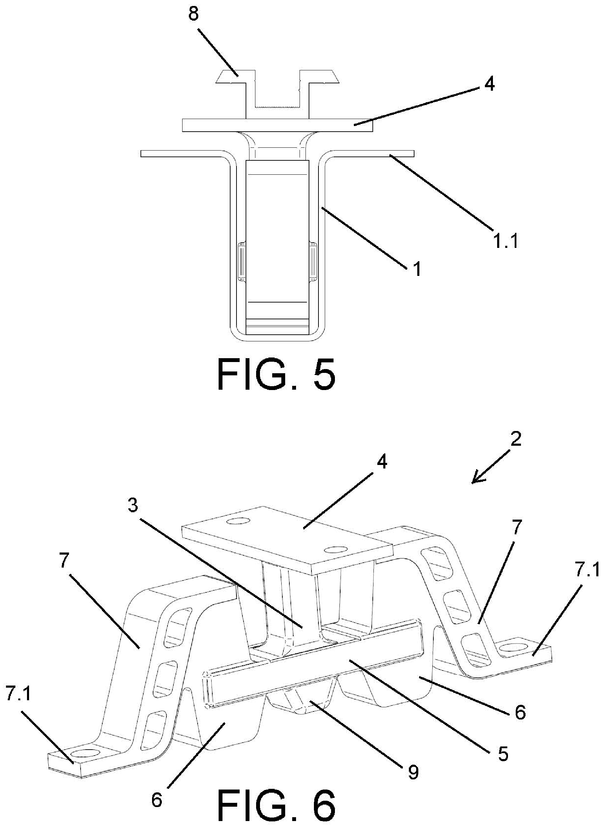

In an alternative embodiment, as shown in figure 5, a clamp (8) is used to attach the solar panel to the plate (4). So the damping device (2) is first attached to the belt (1), the panel is resting on the plate (4) and the clamp (8) is attached to the plate (4), leaving the solar panel trapped between the plate (4) and the clamp (8) for the attachment thereof. In this configuration, the length of the plate (4) can be shorter, thus reducing material and facilitating assembly work.

In the structural formation of the damping devices (2), it is also provided that the metal plates (7) can be made of extruded aluminium, so as to reduce the weight while maintaining the strength of the assembly, as shown in figure 6, where the platens (7) are thicker, with a series of holes to lighten the structure.

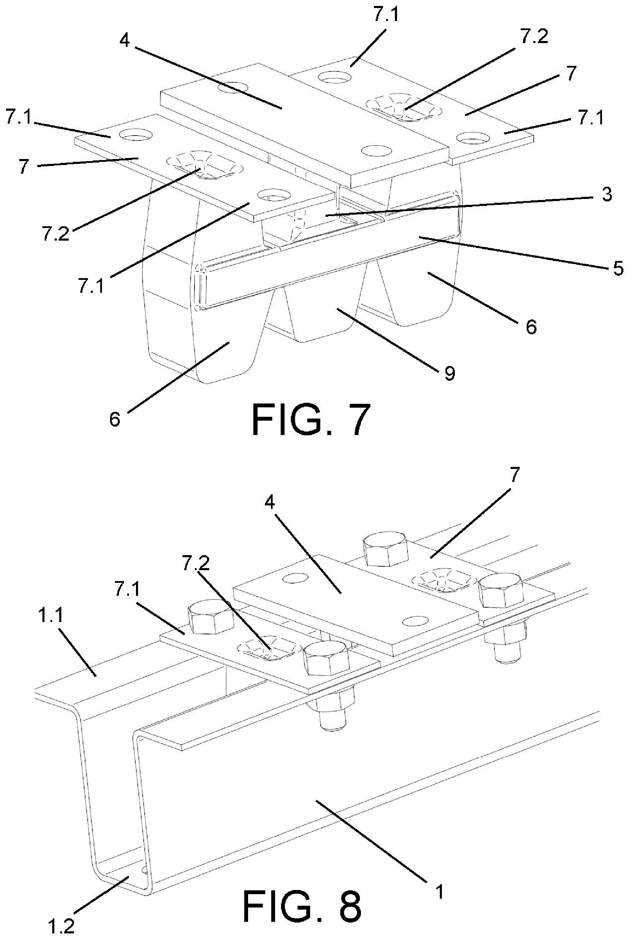

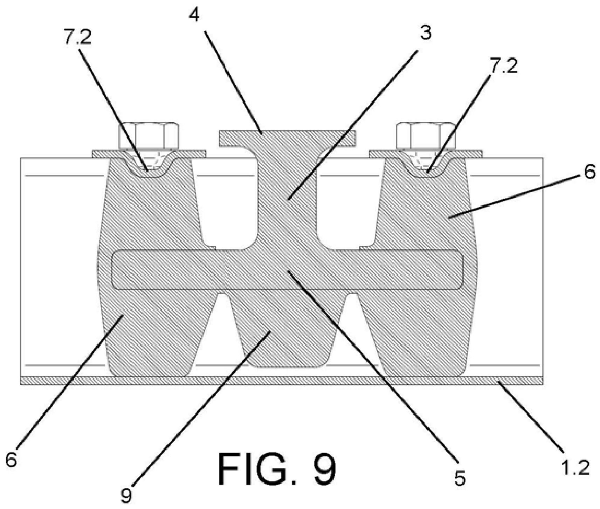

The formation of the damping devices (2) may also have other alternative embodiments, for example as shown in figures 7 to 9, in which the metal platens (7) which are joined to the blocks (6) of elastic material are in the form of flat plates which are arranged on the upper side of the blocks (6) of elastic material, in this case for said plates to be attached on the wings (1.1) of the damping belt (1). This configuration facilitates the screwing of the damping device (2), as it is attached at the top instead of inside the groove as in the previously described embodiments. However, the prestressing of the blocks (6) is less controllable.

In accordance with a design feature of this latest embodiment of the invention, the flat platens (7) are provided to comprise a recess (7.2), preferably centred, which provides rigidity to the flat platens (7) so that they do not deflect under loads from above. Additionally, they create a bulge in the area of the elastic material which makes the device saturate earlier and this parameter able to be adjusted.

## Claims

1. A damping belt (1) for solar trackers, for fastening panels on a rotation shaft of a solar tracker, comprising at least one vibration damping device (2) with a rigid central body (3), which comprises at the upper portion thereof a plate (4) for fastening the solar panels thereto, while at the lower portion thereof it comprises a cross member (5) arranged in the longitudinal direction of the belt (1) in an operative position, and which is embedded at its ends in blocks (6) of elastic material, said blocks (6) being joined to platens (7), the platens (7) having wings (7.1) for attaching the vibration damping device (2) to the damping belt (1), so that the blocks (6) are resting on the bottom (1.2) of the groove of the damping belt (1) and the rigid central body (3) has freedom of movement in the direction perpendicular to the plane of the solar panel for damping vibrations in the operative position.

2. The damping belt (1) according to claim 1, wherein the platens (7) are of inclined geometry towards the rigid central body (3) with the wings (7.1) configured for attaching said platens (7) to the bottom (1.2) of the groove of the damping belt (1) in an operative position.

3. The damping belt (1) according to the preceding claim, wherein the blocks (6) of elastic material in an inactive position protrude from the plane of attachment of the platens (7) at the bottom (1.2) of the damping belt (1) so that prestressing occurs after attaching the vibration damping device (2) in the operative position.

4. The damping belt (1) according to claim 2 or 3, comprising folded wings (1.1).

5. The damping belt (1), according to claim 2, comprising a clamp (8) attachable to the plate (4) for attaching the solar panel between the plate (4) and said clamp (8).

6. The damping belt (1) according to claim 1, wherein the platens (7) are of flat geometry with their wings (7.1) configured for attaching said platens (7) on the wings (1.1) of the damping belt (1).

7. The damping belt (1) according to the preceding claim, wherein the platens (7) comprise recesses (7.2) towards the blocks (6) of elastic material.

8. The damping belt (1) according to any one of the preceding claims, wherein the cross member (5) of the rigid central body (3) protrudes from the sides of the blocks (6) of elastic material.

9. The damping belt (1), according to any one of the preceding claims, wherein the lower portion of the cross member (5) of the metal central body (3) incorporates a protrusion (9) of elastic material that acts as a stop for the displacement of the rigid central body (3).
